# EUROPEAN PATENT SPECIFICATION

(11) **EP 2 497 583 B1**
(45) Date of publication and mention of the grant of the patent: **21.08.2013**
(21) Application number: 12158039.3
(22) Date of filing: 05.03.2012
(51) Int. Cl.: B21J 9/02, B21K 1/40, B21K 25/00, F16C 35/063, B60B 27/00, B21J 5/02, B21K 23/04

(54) **Method of manufacturing a shaft member for a wheel hub assembly with rolling bearings**
Verfahren zur Herstellung eines Schaftelements für eine Radnabenanordnung mit Wälzkörpern
Procédé de fabrication d'un arbre pour moyeu de roue à roulement

(30) Priority: 07.03.2011 JP 2011048911
(43) Date of publication of application: 12.09.2012
(73) Proprietor: JTEKT Corporation, Osaka-shi, Osaka 542-8502 (JP)
(72) Inventor: Nakao, Motonori, Osaka-shi, Osaka 542-8502 (JP)
(74) Representative: Winter, Brandl, Fürniss, Hübner, Röss, Kaiser, Polte - Partnerschaft

(56) References cited:
- JP-A- 2006 111 070

## Description

### BACKGROUND OF THE INVENTION

### 1. Field of the Invention

The invention relates to a method of manufacturing a shaft member (may also be called "hub wheel") for a wheel rolling bearing device.

### 2. Description of Related Art

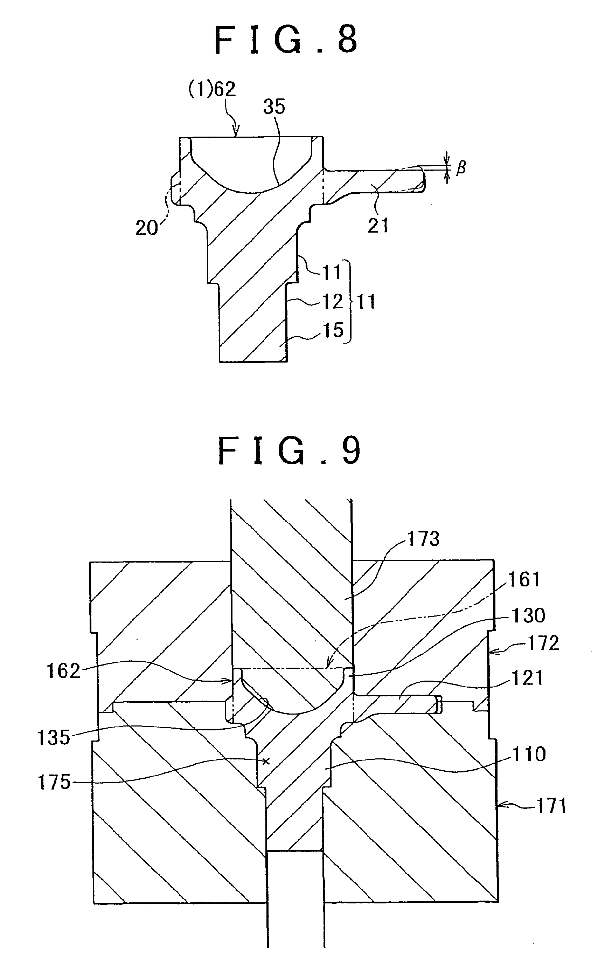

A conventional shaft member for a wheel rolling bearing device has a shaft portion, a fitting shaft portion, and flanges. The shaft portion has an inner ring raceway surface on its outer periphery. The fitting shaft portion is formed at one end side of the shaft portion. The flanges are located between the shaft portion and the fitting shaft portion so as to extend radially outward. For example, Japanese Patent Application Publication No. 2006-111070 (JP 2006-111070 A) describes a method of manufacturing such a shaft member for a wheel rolling bearing device with the use of a forging die apparatus for cold forging according to the preamble of claim 1. According to the above method of manufacturing a shaft member for a wheel rolling bearing device, first, a round rod made of carbon steel for machine structure use is cut into a piece having predetermined length. Thus, a columnar workpiece is formed. Next, the columnar workpiece is subjected to annealing (spheroidizing annealing). The columnar workpiece is then subjected to cold forward extrusion to form a primary molded piece 161. After that, as shown in FIG. 9, the primary molded piece 161 is set in a cavity 175 formed between a first molding die 171 and a second molding die 172. The first molding die 171 and the second molding die 172 constitute a forging die apparatus for cold lateral extrusion. Then, while a forged recess 135 is formed at the center of an end surface of a fitting shaft portion 130 of the primary molded piece 161 by a punch 173, a portion of the primary molded piece 161, located between a shaft portion 110 and the fitting shaft portion 130, is extruded radially outward. Thus, a secondary molded piece (shaft member) 162 having flanges 121 is formed.

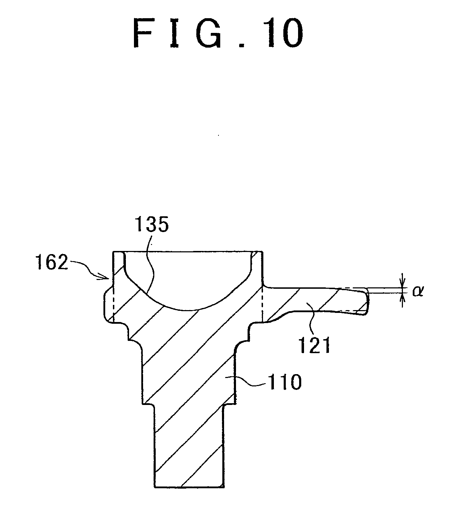

If the flanges 121 are formed through cold lateral extrusion as described above, when the secondary molded piece (shaft member) 162 is taken out of the cavity 175 between the first and second molding dies 171 and 172 and is released, each flange 121 of the secondary molded piece (shaft member) 162 warps toward the shaft portion 110 due to springback caused by, for example, fiber flow formed through cold forging, as shown in FIG. 10. That is, as shown in FIG. 10, each flange 121 warps, that is, shifts from the straight state shown by the alternate long and two short dashes line to the curved state shown by the solid line. Therefore, it is necessary to set a turning stock allowance by increasing the thickness of each flange 121 by an amount corresponding to a warpage amount α. Therefore, material yield deteriorates by an amount of turning stock allowance corresponding to the warpage amount α of each flange 121, and a lot of time is required for turning.

### SUMMARY OF THE INVENTION

It is an object of the invention to provide a method of manufacturing a shaft member for a wheel rolling bearing device, which makes it possible to suppress warpage of flanges due to springback after cold forging, thereby reducing a turning stock allowance of the flanges.

An aspect of the invention relates to a method of manufacturing a shaft member for a wheel rolling bearing device. The shaft member has a shaft portion, a fitting shaft portion formed on one end side of the shaft portion and a flange located between the shaft portion and the fitting shaft portion so as to extend radially outward. According to the method, when the flange is formed on a part between the shaft portion and the fitting shaft portion through lateral extrusion while a forged recess is formed at a center of an end surface of the fitting shaft portion with the use of a forging die apparatus for cold forging, the flange is formed so as to be deformed in a direction opposite to a direction, in which the flange warps due to springback caused after the lateral extrusion, by an amount corresponding to an amount of warpage due to the springback.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an axial sectional view that shows a state where a shaft member manufactured by a method of manufacturing a shaft member for a wheel rolling bearing device according to an example embodiment of the invention is fitted to a wheel rolling bearing device;
FIG. 2 is a view of the shaft member according to the example embodiment of the invention when viewed from a forged recess side as indicated by the arrow II in FIG. 1;
FIG. 3 is an axial sectional view of the shaft member, taken along the line III-III in FIG. 2;
FIG. 4A to FIG. 4D are process drawings that sequentially show processes of manufacturing the shaft member for a wheel rolling bearing device from a columnar workpiece according to the example embodiment of the invention, where FIG. 4A shows a columnar workpiece, FIG. 4B shows a primary cold forged piece, FIG. 4C shows a secondary cold forged piece, and FIG. 4D shows a shaft member obtained through turning and grinding
FIG. 5 is an axial sectional view that shows a state where the primary molded piece (primary cold forged piece) is set in a cavity between first and second molding dies of a lateral extrusion forging die apparatus and the dies are closed;
FIG. 6 is an axial sectional view that shows a state where a forged recess is formed in an end surface of a fitting shaft portion of the primary molded piece by a punch while multiple flanges are formed through lateral extrusion;
FIG. 7 is an enlarged axial sectional view that shows each flange molding portion of the cavity between the first and second molding dies;
FIG. 8 is an axial sectional view that shows a state where each flange of a secondary molded piece (shaft member) is flattened due to springback when the secondary molded piece is taken out of the lateral extrusion forging die apparatus and is released;
FIG. 9 is an axial sectional view that shows a state where a forged recess is formed in an end surface of a fitting shaft portion of a primary molded piece set in a cavity between first and second molding dies of a conventional lateral extrusion forging die apparatus while multiple flanges are formed through lateral extrusion; and
FIG. 10 is an axial sectional view that shows a state where the flanges of a secondary molded piece (shaft member) are warped toward a shaft portion due to springback when the secondary molded piece is taken out of the lateral extrusion forging die apparatus and is released.

### DETAILED DESCRIPTION OF EMBODIMENTS

An example embodiment of the invention will be described with reference the accompanying drawings.

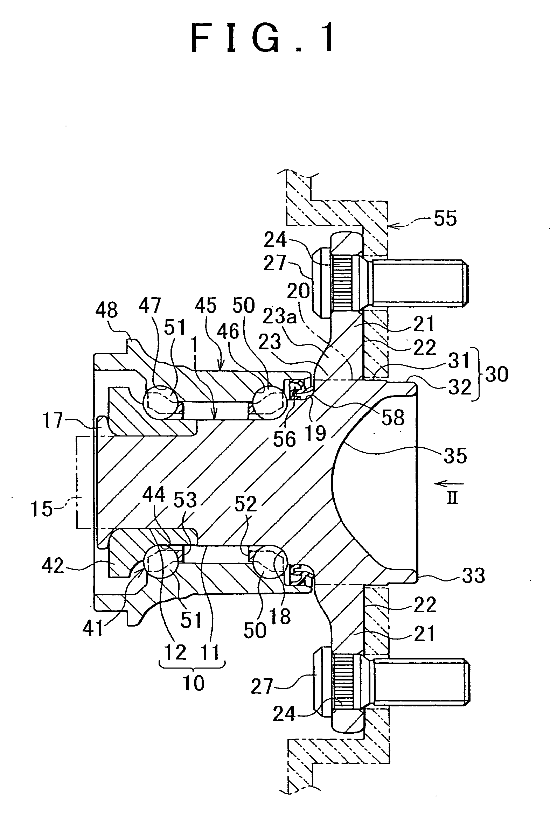

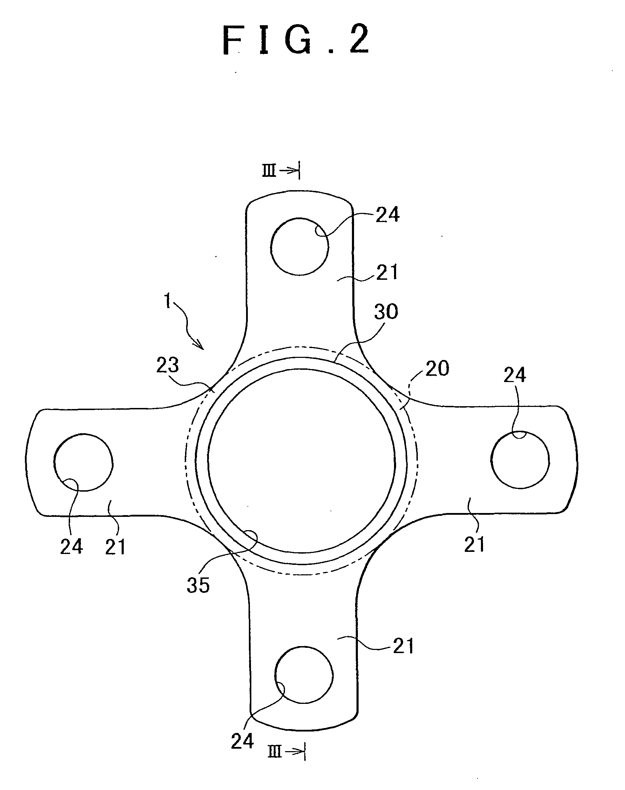

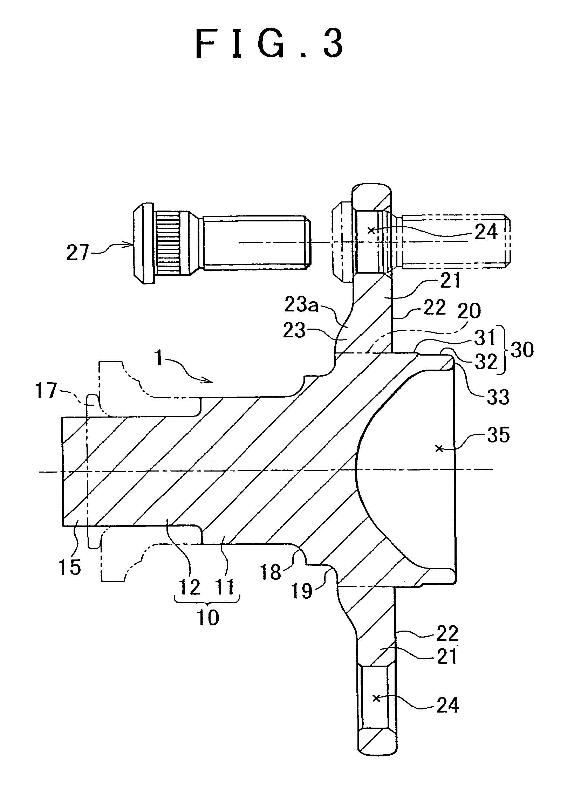

A wheel rolling bearing device that has a shaft member according to an example embodiment of the invention will be described with reference to FIG. 1 to FIG. 3. As shown in FIG. 1, a shaft member (which may also be called "hub wheel") 1 employed for a wheel rolling bearing device (wheel hub unit) has a shaft portion 10, a fitting shaft portion 30, a flange base portion 23 and a plurality of flanges 21 that are all formed from a single-piece material. The fitting shaft portion 30 is formed on one end side of the shaft portion 10, and is larger in diameter than the shaft portion 10. The fitting shaft portion 30 is fitted into a center hole of a wheel (not shown). The flange base portion 23 is located between the shaft portion 10 and the fitting shaft portion 30. The flanges 21 extend radially outward from the outer periphery of the flange base portion 23 in a radial fashion.

In the example embodiment, the shaft portion 10 of the shaft member 1 is formed in a stepped shaft shape such that a portion on the flanges 21-side is larger in diameter than a portion on the distal end side. A first inner ring raceway surface 18 of a double-row rolling bearing (double-row angular contact ball bearing) 41 is formed on the outer periphery of a large diameter portion 11 of the shaft portion 10. An inner ring member 42 is fitted to the outer periphery of a small diameter portion 12 of the shaft portion 10. The inner ring member 42 has a second inner ring raceway surface 44 on its outer periphery. Furthermore, a shaft end portion 15 having the same diameter as the small diameter portion 12 extends at a distal end portion of the shaft portion 10. A distal end portion of the shaft end portion 15 is clinched radially outward to form a clinched portion 17. Thus, the inner ring member 42 is fixed to the outer periphery of the small diameter portion 12.

An outer ring member 45 is arranged around the outer periphery of the shaft portion 10 of the shaft member 1 with an annular space left between the out ring member 45 and the shaft portion 10. Outer ring raceway surfaces 46, 47 that respectively correspond to the inner ring raceway surfaces 18, 44 of the shaft member 1 are formed on the inner periphery of the outer ring member 45 at a predetermined interval in the axial direction. A plurality of rolling elements (balls) 50, 51 are retained by cages 52, 53 and rollably arranged between the inner ring raceway surfaces 18, 44 and the outer ring raceway surfaces 46, 47, respectively. A required axial preload is applied to the rolling elements (balls) 50, 51 that are arranged between the inner ring raceway surfaces 18, 44 and the outer ring raceway surfaces 46, 47, respectively, on the basis of clinching force produced at the time of clinching the shaft end portion 15 of the shaft portion 10 to form the clinched portion 17. A vehicle body-side flange 48 is integrally formed with the outer periphery of the outer ring member 45. The vehicle body-side flange 48 is fastened to the mounting surface of a vehicle body-side member with bolts. The vehicle body-side member, for example, a knuckle or a carrier, is supported by a suspension device (not shown) of a vehicle. A seal member 56 is press-fitted and assembled to the inner periphery of one end portion of the outer ring member 45. A distal end portion of a lip 58 of the seal member 56 is brought into sliding contact with a sealing surface 19 formed in proximity to a shoulder of the inner ring raceway surface 18 of the shaft member 1.

The flanges 21 of the shaft member 1 are formed through cold lateral extrusion when a forged recess 35 is formed at the center of the end surface of the fitting shaft portion 30. Thick wall portions 23a that bulge toward the interior of the vehicle are respectively formed on one sides (sides that are vehicle interior-side surfaces when rotor support surfaces 22 of the flanges 21 are vehicle exterior-side surfaces) of portions contiguous with the outer periphery of the flange base portion 23 of the flanges 21. The thick wall portions 23a each are formed in an inclined shape or a curved shape such that the thickness thereof gradually reduces from the flange base portion 23 toward the distal end side. The flanges 21 respectively have bolt holes 24. Hub bolts 27 that fasten the shaft member 1 to a wheel are respectively press-fitted in the bolt holes 24. The fitting shaft portion 30 has a brake rotor fitting portion 31 on the flanges 21-side. A brake rotor 55 is fitted to the brake rotor fitting portion 31. The fitting shaft portion 30 has a wheel fitting portion 32 at its distal end. The wheel fitting portion 32 is slightly smaller in diameter than the brake rotor fitting portion 31. A wheel is fitted to the wheel fitting portion 32.

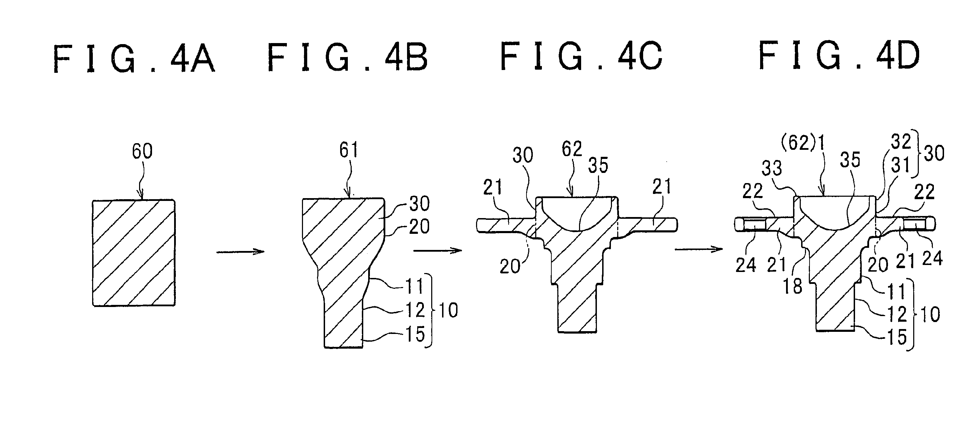

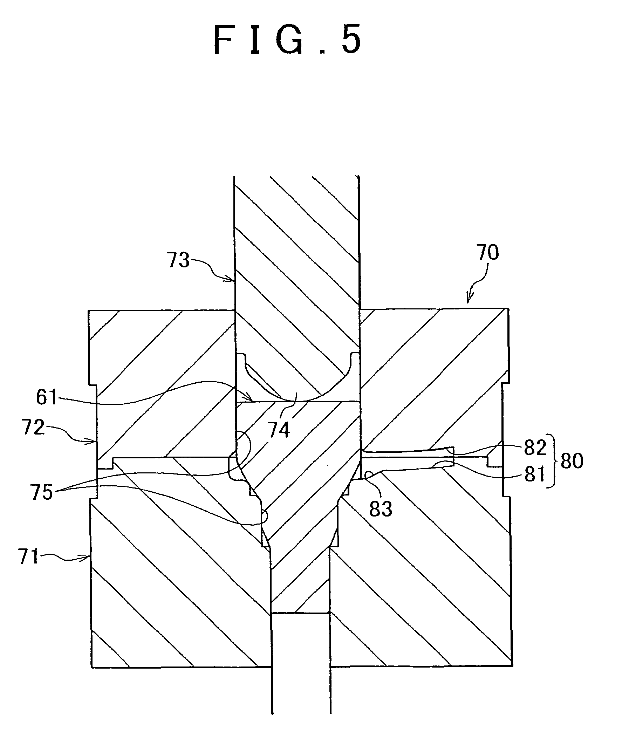

Next, a method of manufacturing a shaft member for a wheel rolling bearing device according to the example embodiment will be described with reference to FIGS. 4A to 4D and to FIGS. 5 to 7. As shown in FIGS. 4A to 4D, a columnar workpiece 60 obtained by cutting a round rod made of carbon steel for machine structure use (for example, a carbon steel having a carbon content of about 0.5%, such as S45C, S50C and S55C, is desirable) into a required length is prepared. The columnar workpiece 60 is, for example, heated to about 800°C and then cooled and subjected to spheroidizing annealing. Preferably, a phosphate that serves as a lubricant is applied onto the surface of the columnar workpiece 60 to form a lubricant coating (phosphate coating).

After that, in the cold forward extrusion process (primary cold forging process), the columnar workpiece 60 is subjected to forward extrusion with the use of a forward extrusion forging die apparatus (not shown). Thus, the shaft portion 10 (that has the large diameter portion 11, the small diameter portion 12 and the shaft end portion 15), an intermediate shaft portion 20 (that is formed into the flange base portion 23 and part of the fitting shaft portion 30) and the fitting shaft portion 30 (in this state, neither the forged recess 35 nor the brake rotor fitting portion 31 has been formed) are formed. In this way, a primary molded piece 61 is manufactured through cold forward extrusion (see FIG. 4B).

Subsequently, in the cold lateral extrusion process (secondary cold forging process), the forged recess 35 is formed at the center of the end surface of the fitting shaft portion 30 of the primary molded piece 61 with the use of a lateral extrusion forging die (core forging die) apparatus 70, and at the same time, the flanges 21 are formed on the outer periphery of the intermediate shaft portion 20 (flange base portion 23) located between the shaft portion 10 and the fitting shaft portion 30 such that the flanges 21 extend in a radial fashion. In this way, a secondary molded piece 62 is manufactured (see FIG. 4C).

As shown in FIG. 5 to FIG. 7, in the forging die apparatus 70 for cold lateral extrusion, a cavity 75 is formed between first and second molding dies 71, 72. The primary molded piece 61 is set in the cavity 75. The cavity 75 has a plurality of flange molding portions 80 that extend in a radial fashion, and that are used when the flanges 21 are formed through lateral extrusion. The flange molding portions 80 each are formed of curved grooves 81, 82 that are formed in the first and second molding dies 71, 72, respectively. That is, an upper wall surface (bottom surface) of the curved groove 81 of the first molding die 71 and a lower wall surface (bottom surface) of the curved groove 82 of the second molding die 72 are formed so as to be curved in a direction opposite to the direction in which each flange 21 warps due to springback caused after lateral extrusion, by amounts β1, β2 each corresponding to a warpage amount β due to springback after lateral extrusion. In addition, the upper wall surface (bottom surface) of the curved groove 81 of the first molding die 71 and the lower wall surface (bottom surface) of the curved groove 82 of the second molding die 72 are formed such that a space equal to the thickness of each flange 21 is left therebetween. In other words, the bottom surface of the curved groove 81 of the first molding die 71 that serves as a drag is formed in a curved surface shape that gradually becomes shallow radially outward, and the bottom surface of the curved groove 82 of the second molding die 72 that serves as a cope is formed in a curved surface shape that gradually becomes deep radially outward. The distance between the bottom surface of the curved groove 81 of the first molding die 71 and the bottom surface of the curved groove 82 of the second molding die 72 is set to be equal to the width of each flange 21. In the example embodiment, a thick wall portion molding groove 83 is formed at a material inflow side of each curved groove 81 of the first molding die 71. Each thick wall portion molding groove 83 corresponds to the thick wall portions 23a contiguous with the outer peripheral portion of the flange base portion 23.

The thick wall portions 23a are respectively formed on one side surfaces of the flanges 21, and the opposite surfaces are formed in flat surfaces that form the rotor support surfaces 22. Thus, the both surfaces of each flange 21 are asymmetric. Therefore, at the time of cold core forging, the material flows into each flange molding portion 80 quickly on the rotor support surfaces 22-side, and slowly on the thick wall portion 23a-side. Therefore, the flanges 21 warp toward the thick wall portions 23a-side due to springback caused after lateral extrusion in core forging. The mean value of the warpage amounts β of the flanges 21 due to springback is obtained through testing, and the curved bottom surfaces of the curved grooves 81, 82 of the first and second molding dies 71, 72 are respectively formed to be curved by amounts β1, β2 corresponding to the warpage amount β based on the above mean value.

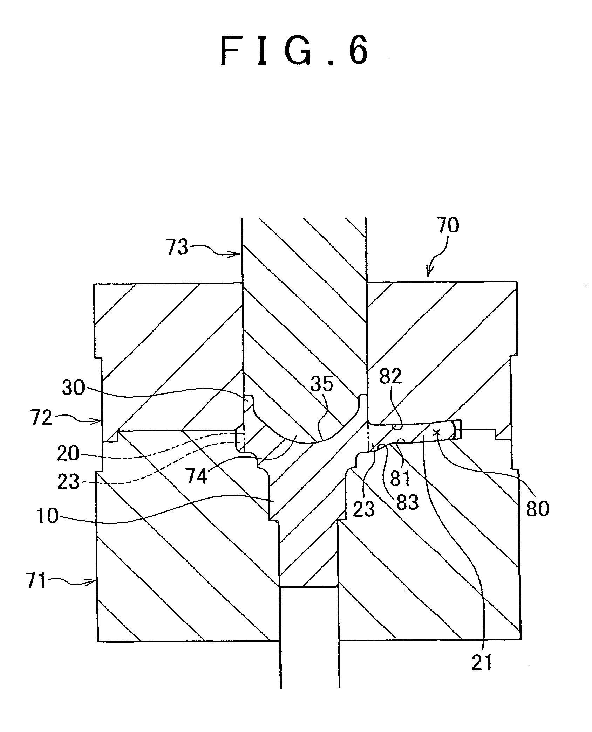

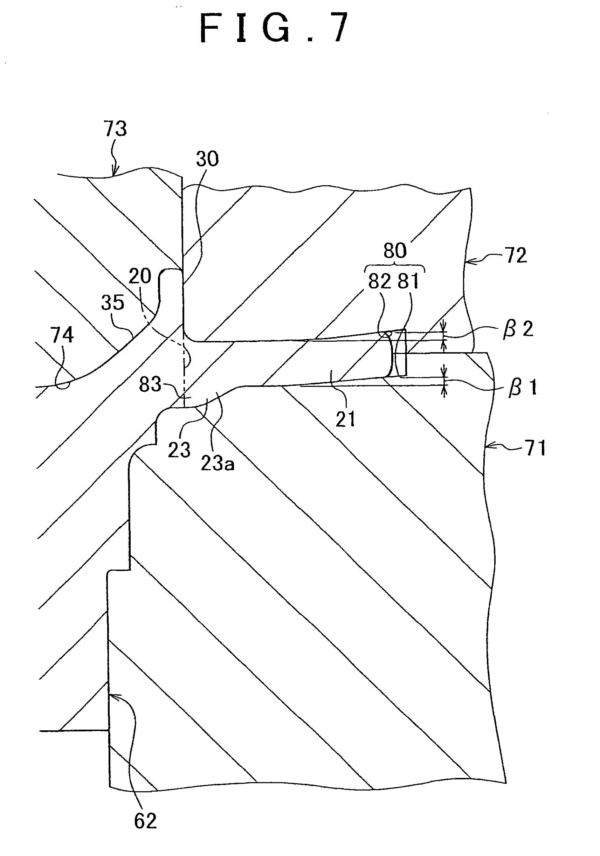

First, as shown in FIG. 5, the first molding die (drag) 71 and second molding die (cope) 72 of the forging die apparatus 70 are prepared. The primary molded piece 61 is placed on the first molding die 71, and then the second molding die 72 is placed on the first molding die 71 to close the forging die apparatus 70. After that, as shown in FIG. 6 and FIG. 7, a punch 73 is lowered toward the center of the end surface of the fitting shaft portion 30 of the primary molded piece 61. Then, while the forged recess 35 is formed at the center of the end surface of the fitting shaft portion 30 with a distal end portion 74 of the punch 73, the outer periphery of the intermediate shaft portion 20 located between the shaft portion 10 and fitting shaft portion 30 of the primary molded piece 61 is laterally extruded into the flange molding portions 80 of the cavity 75 formed between the first and second molding dies 71, 72. Thus, the flanges 21 having the flange base portion 23 and the thick wall portions 23a at their base end portions are formed to manufacture a secondary molded piece 62 (molded piece before it is turned and ground to be shaped into the shaft member 1).

In the above-described method of manufacturing a shaft member for a wheel rolling bearing device according to the example embodiment of the invention, the upper wall surface (bottom surface) of the curved groove 81 and the lower wall surface (bottom surface) of the curved groove 82, the curved grooves 81, 82 constituting the flange molding portion 80 of the cavity 75, are formed to be curved in the direction opposite to the direction in which the flange 21 warps due to springback, by the amounts each corresponding to the warpage amount due to springback after the flange 21 is formed through lateral extrusion. Then, when the flanges 21 are formed by lateral extrusion, the flanges 21 each are formed to be curved in the direction opposite to the direction of warpage of the flanges 21 due to springback by amounts β1, β2 each corresponding to the warpage amount β due to springback after the flanges 21 are formed through lateral extrusion (see FIG. 7 and the alternate long and two short dashes line in FIG. 8). Thus, when the first molding die 71 and second molding die 72 of the forging die apparatus 70 are separated from each other (the forging die apparatus 70 is opened) and then the secondary molded piece 62 (which corresponds to the shaft member 1) is taken out and released, the flanges 21 are flattened so as to be perpendicular to the axis of the shaft portion 10 due to springback that causes the flanges 21 to curve in a direction opposite to the direction in which the flanges 21 are curved through forging, as indicated by the solid line in FIG. 8. Because warpage of each flange 21 is suppressed as described above, it is possible to reduce the turning stock allowance of each flange 21, thereby improving material yield. In addition, suppression of warpage of each flange 21 facilitates turning, which contributes to cost reduction.

Various portions of the secondary molded piece 62, which require turning, such as an end surface 33 of the fitting shaft portion 30 and an edge of the bolt hole 24 of each flange 21, are subjected to turning. The rotor support surfaces 22 that are one side surfaces of the flanges 21 are subjected to turning as needed. Furthermore, the brake rotor fitting portion 31 and the wheel fitting portion 32 of the fitting shaft portion 30 are also subjected to turning as needed. Note that the brake rotor fitting portion 31 and the wheel fitting portion 32 of the fitting shaft portion 30 may be formed at the same time when the secondary molded piece 62 is formed through cold forging.

Lastly, some portions of the shaft portion 10 of the secondary molded piece 62, that is, the inner ring raceway surface 18, part of the large diameter portion 11 next to the inner ring raceway surface 18, the outer periphery of the small diameter portion 12, and the surface of the step between the large diameter portion 11 and the small diameter portion 12 are subjected to heat treatment (tempering after induction hardening), and then the heat-treated portions are subjected to grinding. In this way, the shaft member 1 is manufactured.

The invention is not limited to the above example embodiment. The invention may be implemented in various other embodiments without departing from the scope of the invention as defined in claim 1.

## Claims

1. A method of manufacturing a shaft member (1) for a wheel rolling bearing device, the shaft member having a shaft portion (10), a fitting shaft portion (30) formed on one end side of the shaft portion (10) and a flange (21) located between the shaft portion (10) and the fitting shaft portion (30) so as to extend radially outward, the method comprising:
forming the flange (21) on a part between the shaft portion (10) and the fitting shaft portion (30) through lateral extrusion while forming a forged recess (35) at a center of an end surface of the fitting shaft portion (30) with use of a forging die apparatus for cold forging,
**characterised in that** during extrusion, the flange is formed so as to be deformed in a direction opposite to a direction in which the flange warps, due to springback caused after the lateral extrusion, by an amount corresponding to an amount of warpage due to the springback.

## Patentansprüche

1. Ein Verfahren zum Herstellen eines Wellenelements (1) für eine Radwälzlagereinrichtung, wobei das Wellenelement einen Wellenabschnitt (10), einen Passwellenabschnitt (30), der an einer Endseite des Wellenabschnitts (10) ausgebildet ist, und einen Flansch (21), der zwischen dem Wellenabschnitt (10) und dem Passwellenabschnitt (30) ausgebildet ist, so dass er sich radial nach außen erstreckt, aufweist, wobei das Verfahren folgende Schritte umfasst:
Ausbilden des Flanschs (21) an einem Abschnitt zwischen dem Wellenabschnitt (10) und dem Passwellenabschnitt (30) durch laterale Extrusion, während des Ausbildens einer geschmiedeten Aushöhlung (35) in einer Mitte einer Endoberfläche des Passwellenabschnitts (30) unter Verwendung einer Schmiedegesenkeinrichtung zum Kaltschmieden,
**dadurch gekennzeichnet, dass** während der Extrusion der Flansch so ausgebildet wird, dass er aufgrund einer nach der lateralen Extrusion verursachten Rückfederung um einen Betrag, der einem Betrag einer Durchbiegung aufgrund der Rückfederung entspricht, in einer Richtung verformt wird, die entgegengesetzt zu einer Richtung ist, in der der Flansch sich krümmt.

## Revendications

1. Procédé de fabrication d'un élément d'arbre (1) pour un dispositif de roulement de roue, l'élément d'arbre ayant une partie d'arbre (10), une partie d'arbre de montage (30) formée sur un côté d'extrémité de la partie d'arbre (10) et une bride (21) disposée entre la partie d'arbre (10) et la partie d'arbre de montage (30) de façon à s'étendre radialement vers l'extérieur, le procédé comportant le fait de :
former la bride (21) sur une partie entre la partie d'arbre (10) et la partie d'arbre de montage (30) par extrusion latérale tout en formant un renfoncement forgé (35) au niveau d'un centre d'une surface d'extrémité de la partie d'arbre de montage (30) en utilisant un appareil à matrice de forgeage pour un forgeage à froid,
**caractérisé en ce que**, pendant l'extrusion, la bride est formée de façon à être déformée dans une direction opposée à une direction dans laquelle la bride se déforme, du fait d'un rappel élastique provoqué après l'extrusion latérale, d'une quantité correspondant à une quantité de déformation due au rappel élastique.
